# EUROPEAN PATENT APPLICATION

(11) **EP 2 068 067 A1**
(43) Date of publication of application: **10.06.2009**
(21) Application number: 07122252.5
(22) Date of filing: 04.12.2007
(51) Int. Cl.: F16M 11/42, G01B 5/00

(54) **Supporting tripod for articulated arm measuring machines**

(71) Applicant: Metris IPR N.V., 3001 Leuven (BE)
(72) Inventor: Tomelleri, Raffaele, 37066 Sommacampagna (VR) (IT)
(74) Representative: Brants, Johan P.E.

(57) **Abstract**

The present invention relates to a supporting and transport tripod (1) especially suited for articulated arm measuring machines (13) characterised by that: it has three supports (14) that bear the tripod in measurement conditions, which supports are integral with the tripod structure (10) with no sliding surfaces in between; and the transition between the two conditions, the fixed one for measurement and the one for transport, occurs by activating the three pivoting wheels (15) by means of one single mechanism, that switches the wheels from the unloaded configuration to that of bearing the tripod and *vice-versa*. The tripod may be provided with an interface for communication with the articulated arm measuring machines, to provide status information and/or instructions thereto.

## Description

The present invention concerns a supporting tripod especially suited for articulated arm measuring machines (e.g. a co-ordinate measuring machine (CMM) arm) that allows to easily switch from carrying conditions on wheels to fix position conditions for measurement with no backlash and high stiffness.

A supporting tripod for an articulated arm measuring machine is required to be easily moved on its three pivoting wheels in order to be brought to the measurement position; it is then required to easily and smoothly move it to measurement conditions, placing it on three rigid supports, and to adjust its height. Tripods currently available on the market do not satisfy all these requirements and most of all they do not allow any quick and smooth transition from carrying conditions on wheels to measurement conditions together with realising the necessarily stiff and backlashless bearing in measurement conditions.

For example some of them allow a smooth transition between the moving condition to the measurement condition, but the operation takes very long time. Other allows a quick transition, but this occurs with a shock that may decrease the accuracy of the measurement machine. There are further tripods that allow a gradual transition from the one condition to the next, but they are not adequately stiff in the fixed measurement position and small backlash is also present.

### SUMMARY OF THE INVENTION

Main purpose of the present finding is that of realising all above mentioned features in the tripod, making sure that a smooth transition from the one condition to the next is achieved in short time and that the fixed position is at the same time characterised by high stiffness and no backlash.

Further purpose of the finding is that of realising the transition between the two conditions by means of one single control to ease the operation and speed it up. Further purpose of the findings is that of making the articulated arm react in correspondence to the condition of the tripod.

Further purpose of the finding is that of making it simpler and cheaper to realise. These purposes, and more as it will turn out from the following description, are realised, according to the invention, by means of a tripod wherein:
1. It has three supports that are fixed to the structure of the tripod, on which the measuring machine is fixed.
2. The transition from the moving condition to fixed one occurs by smoothly lifting the wheels, that switch from being the tripod support to the situation the tripod is beared by the three supports.
3. The control for the lifting and lowering of the pivoting wheels is centralised.
4. The centralised control that moves the wheels is realised by means of a gearbox reduction, that can be either activated by hand or by a motor.
5. The tripod may be electronically connected to the measuring arm such that the measuring arm may request the condition of the tripod and react accordingly.
6. The tripod may be electronically connected to the measuring arm such that the tripod may request the status of the arm and react accordingly.

One embodiment of the invention is a supporting and transport tripod especially suited for articulated arm measuring machines wherein:
- it has three supports that bear the tripod in measurement conditions, which supports are integral with the tripod structure, and
- the transition between the two conditions, the fixed one for measurement and the one for transport, occurs by activating the three pivoting wheels by means of one single mechanism, that switches the wheels from the unloaded (retracted wheels) configuration to that of bearing the tripod (deployed wheels) and *vice-versa.*

Another embodiment of the invention is a supporting and transport tripod as described above, wherein wheel movements to bring them from the unloaded configuration to that of bearing the tripod and vice-versa, is realised by means of a gearbox reducer that, through interposition of a disk with three pins, drives three rods that lift or lower the wheels.

Another embodiment of the invention is a supporting and transport tripod as described above, wherein wheel movements to bring them from the unloaded configuration to that of bearing the tripod and vice-versa, is a vertical translation.

Another embodiment of the invention is a supporting and transport tripod as described above, wherein wheel movements to bring them from the unloaded configuration to that of bearing the tripod and vice-versa, is achieved by means of a pantograph mechanism.

Another embodiment of the invention is a supporting and transport tripod as described above, wherein the single mechanism is driven by a motor.

Another embodiment of the invention is a supporting and transport tripod as described above, further comprising one or more status-indicating light emitting diodes, LEDs.

Another embodiment of the invention is a supporting and transport tripod as described above, further comprising a status-indicating display screen.

Another embodiment of the invention is a supporting and transport tripod as described above, wherein the tripod further comprises an interface for use with a mounted articulated arm measuring machine configured to provide status information and/or to provide instructions thereto.

Another embodiment of the invention is a supporting and transport tripod as described above, wherein the interface is operably connected to a sensor or other means to determine the status of the tripod.

Another embodiment of the invention is a method for measuring an object comprising the use of an articulated arm measuring machine mounted on a tripod as defined in any of the previous embodiments.

Another embodiment of the invention is a method for measuring an object as described above, wherein the acquisition of data by the articulated arm measuring machine is suspended when the wheels are deployed, being deployed or being retracted.

Another embodiment of the invention is a method for measuring an object as described above, wherein the articulated arm measuring machine is equipped with a brake, and the brake is applied when the wheels are deployed, being deployed or being retracted.

### BRIEF DESCRIPTION OF THE DRAWINGS

The present invention is here below further described in some preferred embodiments that are to be considered in all respects as illustrative and not restrictive, with reference made to the attached tables and drawings, where:
- **FIG. 1**: schematically shows a front view of the tripod
- **FIG. 2**: schematically shows a vertical section of the part including the wheels when these are unloaded
- **FIG. 3**: schematically shows a vertical section of the part including the wheels when these are loaded
- **FIG. 4**: schematically shows the tripod with a horizontal section
- **FIG. 5**: shows the connection between the tripod of the invention and a measuring arm.

### DETAILED DESCRIPTION OF THE INVENTION

Unless defined otherwise, all technical and scientific terms used herein have the same meaning as is commonly understood by one of skill in the art. All publications referenced herein are incorporated by reference thereto. All United States patents and patent applications referenced herein are incorporated by reference herein in their entirety including the drawings.

The articles "a" and "an" are used herein to refer to one or to more than one, *i*.*e*. to at least one of the grammatical object of the article. By way of example, "a motor" means one motor or more than one motor.

The recitation of numerical ranges by endpoints includes all integer numbers and, where appropriate, fractions subsumed within that range (*e*.*g*. 1 to 5 can include 1, 2, 3, 4 when referring to, for example, a number of buttons, and can also include 1.5, 2, 2.75 and 3.80, when referring to, for example, a measurement). The recitation of end points also includes the end point values themselves (*e*.*g*. from 1.0 to 5.0 includes both 1.0 and 5.0)

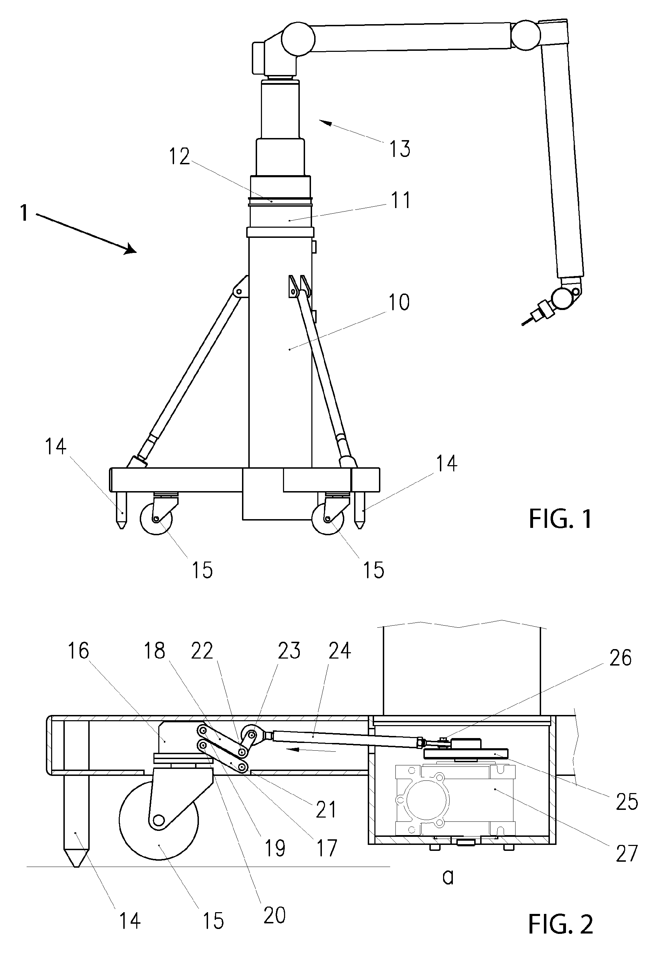

**FIG. 1** shows a front view of the tripod **1** basically consisting of the lower structure **10,** of the sliding bush **11** ending with the flange **12,** to which the measuring machine **13** is fixed. The tripod has three fixed supports **14** and three pivoting wheels **15.**
**FIG. 2** shows a vertical section of the mechanism that realises the vertical movement of the wheel. The pivoting wheel **15** is integral with the wheel-bearing box **16,** constrained by beams **17** and **18** of equal length and with equal distance between the axes at their ends, which beams are hinged at **19** and **20** in the wheel-bearing box **16,** and at **21** and **22** in the tripod structure. Arm **23** is integral with the upper beams and rod **23** departs from it. Form the above described configuration of the elements it turns out that, as rod **24** moves in the direction of the arrow, an anti-clockwise rotation of arm **23** follows, that makes beams **17** and **18** rotate of the same angle around axes **21** and **22,** so the wheel-bearing box **16** translates downwards. Such translation continues until the wheel has touched the ground (deployed position) and the wheel starts bearing the load previously beared by the supports **14.**
The pantograph-like beam system **17** and **18** can be realised with a single pair of beams **17** and **18** or with more beam pairs as **17** and **18.**
The solution that we will show foresees two pairs of such beams.

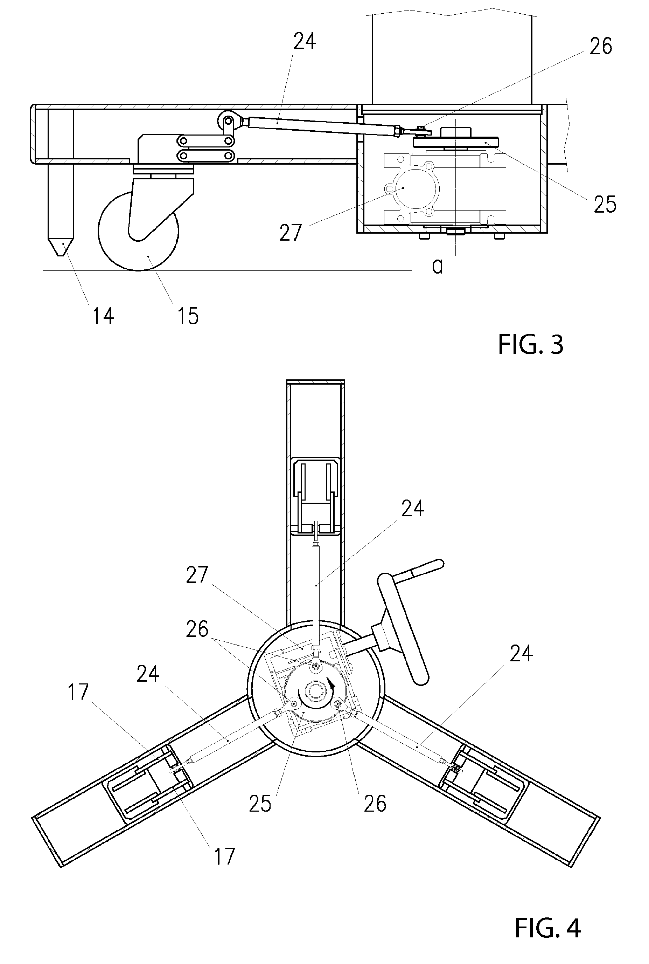

**FIG. 3** shows wheel **15** in lowered position and thus the three supports are lifted from the ground. Such configuration is achieved when rod **24** has reached its end-of-run, and allows to move the tripod if pushed by hand from a position to the next. Driving the rod to the opposite direction gives the opposite movement until the supports come back and support the entire weight, the wheels are unloaded (retracted) and the tripod has a stable position that allows carrying out measurements.
The simultaneous movement of the three rods making the three wheels **15** translate is realised as shown in **FIGs. 3** and **4** by means of a central disk with vertical axis, and driven by a gearbox reducer **27,** such disk having three axes **26** at 120° from each other. Starting from the position shown in **FIG. 4****,** an anti-clockwise rotation of disk **25** makes all three rods pull arms **23** towards the centre, so lifting the three wheels.
If the rotation occurs in the opposite direction, the three rods are pushed away from the centre, giving the opposite movement that lowers the three wheels. Because the mechanism irreversible, there is no risk that the wheels might ever be moved back by the weight or loads.
Further the vertical translation of the three wheels, as effect of the pantograph movement, ensures that the pivoting wheels move correctly during their vertical movement.

The present invention has been illustrated and described in one preferred embodiment, but it is intended that variations in the execution are still possible, within the scope and the protection of the present patent for industrial invention.

The user wheel can be replaced by a motor operatively connected to one or more buttons (*e*.*g*. 2, 3, 4, 5 or more) where the power comes from a separate battery or from the measuring arm. The wheel may be deployed or retracted by said buttons.

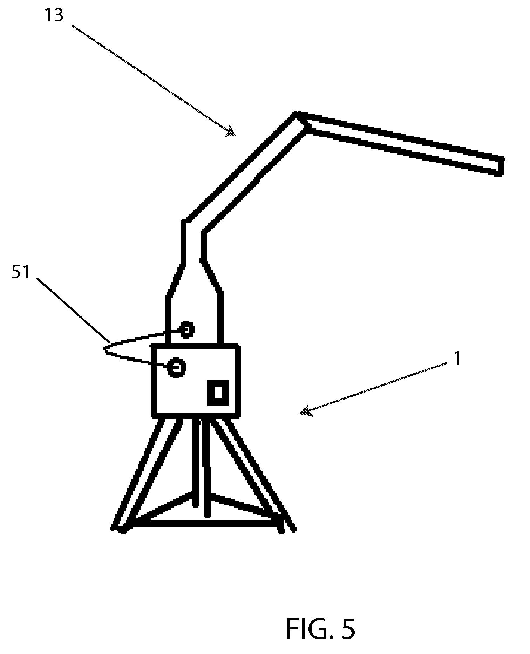

According to one embodiment, the tripod may be configured to intelligently interact with a measuring arm. For example, there may be a communication or power link **51 (****FIG. 5****)** between the tripod **1** and the measuring arm **13.** The measuring arm may request the status of the tripod. If the tripod is moving (or on its wheel), data acquisition may be prevented or stopped. Alternatively, when the tripod comes onto its wheel, the brakes of a manual measuring arm equipped with brakes are automatically locked. Thus, according to one aspect of the invention, the tripod comprises an interface (*e*.*g*. electronic or electrical) for use with the measuring arm to provide status information thereto and/or to provide instructions thereto (such as to engage an arm brake or to stop the acquisition). Preferably, the interface is operably connected to a sensor or other means to determine the status of the tripod (*e*.*g*. wheels deployed, wheels retracted, changing state between deployed or retracted, tripod moving). The measuring arm may be configured to request status information *via* the interface, and to proceed or stop with data acquisition according to the status. Alternatively or in addition, the measuring arm equipped with brakes may be configured to automatically lock when the status indicates the tripod wheels are deployed.

The tripod may be equipped by status LEDs (light-emitting diodes, *e*.*g*. red, amber, and green) to provide feedback to the user. For example, an indication of a green LED might mean that the tripod is locked, an indication of a red LED might mean that the tripod is its wheel and/or an indication of an amber LED might mean that the tripod is changing its state.

The tripod may be equipped with a display screen to provide feedback to the user. For example, it may notify the user that the tripod is switching its state to the unlocked state and that the user should lock the measuring arm. It may also provide an indication that the wheels deployed, wheels retracted, changing state between deployed or retracted, or the is tripod moving. Alternatively, the screen may notify that the batteries should be changed. The screen may be any of the art, capable of displaying alpha-numeric text and/or figures, and includes LCD, plasma, OLED type, CRT type screens.

According to another aspect of the invention, the tripod may comprise a holder for additional batteries suitable for use with the measuring arm. The holder may comprise a power-output connection, allowing the measuring arm to connect directly with holder batteries *via* an electrically conducting lead.

Another aspect of the invention is a method for measuring an object comprising the use of a measuring arm mounted on a tripod of the invention.

## Claims

1. Supporting and transport tripod especially suited for articulated arm measuring machines wherein:
- it has three supports that bear the tripod in measurement conditions, which supports are integral with the tripod structure, and
- the transition between the two conditions, the fixed one for measurement and the one for transport, occurs by activating the three pivoting wheels by means of one single mechanism, that switches the wheels from the unloaded (retracted wheels) configuration to that of bearing the tripod (deployed wheels) and *vice-versa*.

2. Supporting and transport tripod according to previous claim 1, wherein wheel movements to bring them from the unloaded configuration to that of bearing the tripod and vice-versa, is realised by means of a gearbox reducer that, through interposition of a disk with three pins, drives three rods that lift or lower the wheels.

3. Supporting and transport tripod according to previous claim 1 and 2, wherein wheel movements to bring them from the unloaded configuration to that of bearing the tripod and vice-versa, is a vertical translation.

4. Supporting and transport tripod according to previous claim 1 and 2, wherein wheel movements to bring them from the unloaded configuration to that of bearing the tripod and vice-versa, is achieved by means of a pantograph mechanism.

5. Supporting and transport tripod according to any of the previous claims wherein the single mechanism is driven by a motor.

6. Supporting and transport tripod according to any of the previous claims further comprising one or more status-indicating light emitting diodes, LEDs.

7. Supporting and transport tripod according to any of the previous claims further comprising a status-indicating display screen.

8. Supporting and transport tripod according to any of the previous claims, wherein the tripod further comprises an interface for use with a mounted articulated arm measuring machine configured to provide status information and/or to provide instructions thereto.

9. Supporting and transport tripod according to claim 5, wherein the interface is operably connected to a sensor or other means to determine the status of the tripod.

10. A method for measuring an object comprising the use of an articulated arm measuring machine mounted on a tripod as defined in any of the previous claims.

11. Method according to claim 10, wherein the acquisition of data by the articulated arm measuring machine is suspended when the wheels are deployed, being deployed or being retracted.

12. Method according to claim 10 to 11, wherein the articulated arm measuring machine is equipped with a brake, and the brake is applied when the wheels are deployed, being deployed or being retracted.
